# FASCICULE DE BREVET EUROPEEN

(11) **EP 0 841 469 B1**
(45) Date de publication et mention de la délivrance du brevet: **17.04.2002**
(21) Numéro de dépôt: 97402647.8
(22) Date de dépôt: 06.11.1997
(51) Int. Cl.: F01D 5/02, F01D 21/04

(54) **Etage de rotor de turbomachine renforcé par des fibres**
Faserverstärkte Turbomaschinestufe
Fiber reinforced stage of a turbo-machine

(30) Priorité: 07.11.1996 FR 9613570
(43) Date de publication de la demande: 13.05.1998
(73) Titulaire: SNECMA MOTEURS, 75015 Paris (FR)
(72) Inventeur: Dambrine, Bruno Jacques Gérard, 77350 - Le Mee Sur Seine (FR)

(56) Documents cités:
- EP-A- 0 321 382
- EP-A- 0 747 573
- FR-A- 2 095 458
- US-A- 4 397 609
- US-A- 4 561 306
- US-A- 5 400 505
- US-A- 5 544 805

## Description

L'invention se rapporte à un étage de rotor de turbomachine du type à jante mince comportant des anneaux de renfort fibreux, et plus particulièrement mais non exclusivement à de tels étages de rotors dont les aubes et la jante desdites aubes ne font qu'un seul bloc inamovible.

Afin d'alléger les rotors de compresseur sur les turbomoteurs pour aéronefs et d'augmenter leur vitesse de rotation, on donne maintenant à ces rotors la forme d'une jante mince renforcée par des anneaux fibreux et supportant les aubes à sa périphérie.

Une telle structure a permis d'atteindre des vitesses de rotation très élevées, mais elle présente cependant deux inconvénients principaux :
1 - Ces rotors présentent une grande souplesse radiale du fait de la minceur de la jante, cette souplesse étant à l'origine de vibrations dont les plus importantes sont suivant des directions radiales. Ces vibrations peuvent se faire en mode 1d, 2d, 3d etc... c'est à dire avec deux ventres de résonnance diamétralement opposés pour le mode 1d, quatre ventres de résonnances à 90° l'un de l'autre pour le mode 2d, six ventres de résonnance à 60° l'un de l'autre pour le mode 3d, etc... De telles vibrations peuvent atteindre des niveaux élevés. Elles provoquent une fatigue prématurée de la matière du rotor, ce qui en réduit la durée d'utilisation. Ces vibrations se propagent aussi au turbomoteur par l'intermédiaire des paliers, ce qui nécessite le renforcement desdits paliers ainsi que de la structure du turbomoteur, avec en contrepartie une augmentation de son coût et de sa masse.

Ce phénomène est aggravé par la présence des aubes à la périphérie du rotor. En effet, ces aubes constituent une masse de matière supplémentaire qui ne participe pas à la rigidité du rotor, avec pour conséquences un abaissement des fréquences de résonance du rotor et une augmentation correspondante de l'amplitude des vibrations.

Un premier problème à résoudre est en conséquence d'augmenter la rigidité du rotor sans en réduire les performances par ailleurs.
2 - Les anneaux de renfort fibreux sont très coûteux pour deux raisons : La première raison est le prix élevé des fibres utilisées, qui sont généralement du carbure de silicium SiC. La seconde raison est la constitution même de ces anneaux fibreux, les fibres dont le diamètre est de l'ordre de 100µm devant être très régulièrement espacées dans une matrice métallique, généralement un alliage de titane TA6V. On peut distinguer deux catégories d'anneaux de renfort fibreux :

Dans une première catégorie, les anneaux de renfort fibreux sont constitués de fibres bobinées et espacées du métal de la matrice, l'ensemble étant ensuite compacté à chaud par un pressage ou un forgeage suivant l'axe géométrique des spirales. Ces anneaux de renfort sont ensuite soudés au rotor, ou bien disposés dans le rotor qui subira un cycle de pressage à haute température destiné à former le rotor et à souder les anneaux à la matière du rotor.

De tels anneaux fibreux ont généralement une section rectangulaire dont les côtés adjacents ont des longueurs voisines. La résistance en traction à des contraintes circonférentielles est très élevée, car elle s'effectue dans le sens des fibres, alors que la résistance en traction à des contraintes radiales est réduite, car elle s'effectue perpendiculairement aux fibres. Comme les anneaux ont une largeur réduite suivant la direction axiale, ils résistent mal à un effort radial tendant à séparer les couches de fibres. De tels anneaux sont en conséquence disposés habituellement de façon à enserrer la matière du rotor, c'est à dire à la périphérie du rotor, sur ses flancs ou à l'intérieur du rotor dans le voisinage du centre de gravité de la section de ce rotor.

Dans une seconde catégorie, les anneaux de renfort sont constitués d'une superposition de feuillards de métal de matrice roulés en cylindrique et recouverts chacun de fibres de renfort parallèles disposées suivant les circonférences des cylindres de feuillards. Une ébauche du rotor comportant une paroi intérieure cylindrique étant réalisée, on dispose l'empilement de feuillards et de fibres contre cette paroi intérieure, et on soumet ensuite l'ensemble à un forgeage radial centrifuge pour compacter les feuillards et les fibres et souder la masse fibreuse ainsi obtenue à la paroi intérieure du rotor. Cette solution est jugée plus rationnelle dans la mesure où elle permet de concentrer les fibres de renfort contre la paroi intérieure du rotor qui est la zone la plus sollicitée par la force centrifuge de rotation. Cette solution permet aussi d'avoir un anneau de renfort avec une section rectangulaire très allongée faisant toute la largeur du rotor. L'inconvénient de cette solution est que les fibres doivent être coupées à la longueur de la circonférence qu'elles occupent avant le forgeage centrifuge, afin qu'elles ne cassent pas pendant le forgeage radial centrifuge. Bien que ces coupures soient réparties uniformément de façon à ne pas se chevaucher, elles créent des hétérogénéités qui affaiblissent le rotor.

La présente invention propose un étage de rotor du type à jante mince renforcé par des fibres, la jante présentant une rigidité radiale améliorée et un moindre volume de fibre de renfort.

Un tel rotor est remarquable en ce qui comporte au moins un anneau de renfort dont la hauteur h suivant une direction radiale est au moins égale à 1,5 fois la largeur 1 de ce même anneau suivant une direction axiale, cet anneau faisant saillie sur la paroi intérieure du rotor sur une distance e au moins égale au tiers de sa hauteur h; Cet anneau est soudé au reste du rotor à la fois par sa périphérie et ses deux flancs.

Dans un mode de réalisation préféré, la hauteur h est au moins égale à 1,8 fois la largeur 1, et l'anneau est en saillie sur la moitié de sa hauteur h.

On comprend que l'augmentation du rapport h/l augmente la rigidité de l'anneau et par répercussion celle du rotor. Ce même rapport h/l augmenté permet aussi de réduire le diamètre de l'anneau de renfort et de le disposer en saillie sur la paroi intérieure du rotor avec les avantages suivants :
1) Le moment quadratique de la section du rotor est augmenté, donc sa rigidité.
2) Cette rigidité est encore améliorée par le fait que l'anneau de renfort est éloigné du centre géométrique de gravité de la section du rotor, alors que le module d'élasticité ou module d'Young des matériaux renforcés par des fibres de SiC est élevé, soit environ 220 000 MPa, comparativement au reste de la matière du rotor, soit 120.000 MPa pour le TA6V.
3) Les fibres de renfort sont ramenées dans la zone du rotor la plus sollicitée, c'est à dire au niveau de la paroi intérieure du rotor.
4) Le diamètre de l'anneau de renfort est réduit, ce qui réduit encore à section constante la quantité de fibre SiC employée et par répercussion le coût du rotor.

L'invention sera mieux comprise et les avantages qu'elle procure apparaîtront plus clairement au vu d'un exemple détaillé de réalisation, d'une comparaison des performances entre un rotor conforme à l'invention et un stator classique de mêmes dimensions pris comme référence, ainsi que des figures annexées.

La figure 1 illustre un rotor à aubes comportant un étage conforme à l'invention, le rayon intérieur du rotor ayant été contracté pour réduire l'encombrement de la figure.

La figure 2 illustre l'étage de rotor conforme à l'invention.

La figure 3 illustre un procédé de réalisation de l'étage de rotor.

La figure 4 illustre un étage de rotor classique de mêmes dimensions que l'étage de rotor d'essai.

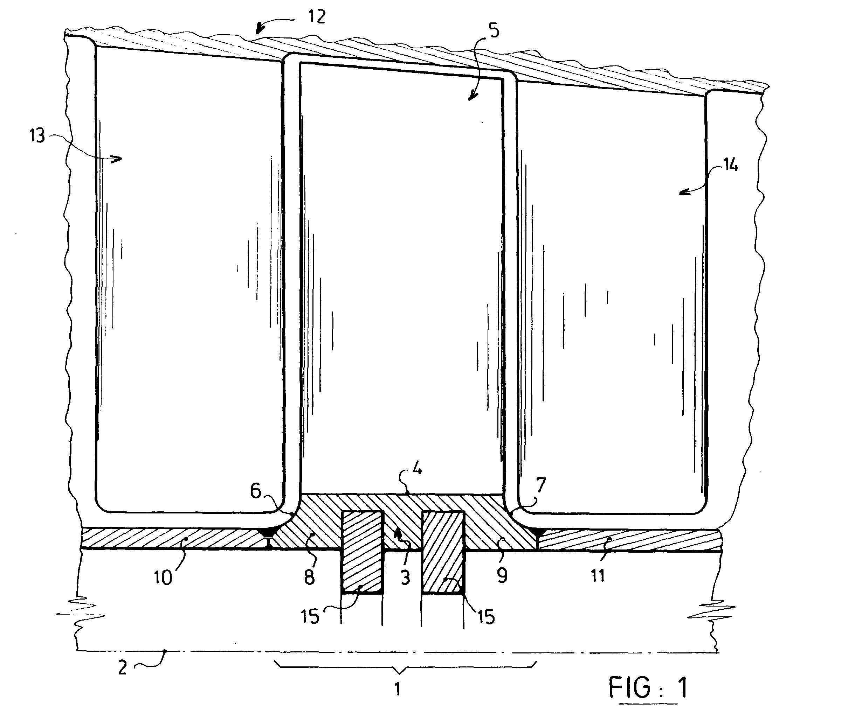

On se reportera en premier lieu à la figure 1. L'étage de rotor 1 a une forme générale de révolution autour de son axe géométrique de rotation 2 et comporte une jante 3 supportant à sa périphérie 4 une pluralité d'aubes 5 s'étendant radialement vers l'extérieur.
La jante 3 comporte sur ses flancs 6 et 7 deux brides respectivement 8 et 9 solidaires par boulonnage, soudage par faisceau d'électrons ou tout autre moyen aux étages adjacents respectivement 10 et 11. L'ensemble tourne autour de l'axe géométrique de rotation 2 à l'intérieur d'un carter 12 supportant deux étages d'aubes de redresseur 13 et 14 fixes et situés de part et d'autre des aubes tournantes 5. Conformément à l'invention, la jante 3 est renforcée par les anneaux fibreux 15.

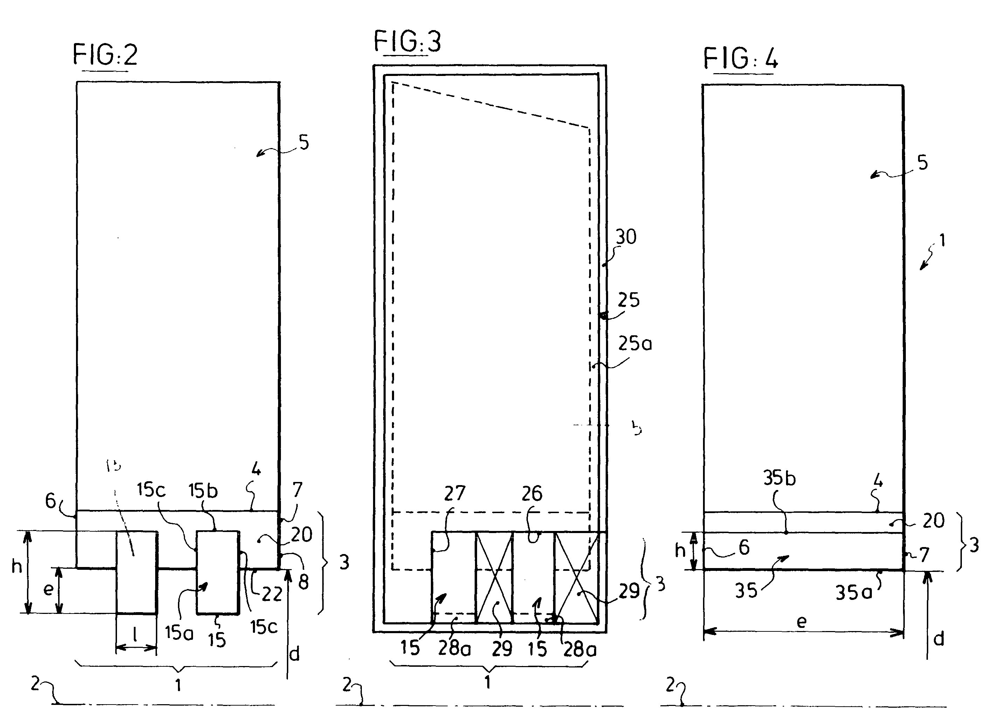

On se reportera maintenant à la figure 2. La jante 3 comporte une première partie 20 de section rectangulaire en alliage de titane TA6V et deux anneaux de renfort 15 en un matériau composé de fibres de carbure de silicium SiC noyées dans une matrice en alliage de titane TA6V. On référencera 22 la paroi intérieure de la partie métallique 20 de ladite jante 3. La paroi intérieure 22 et la périphérie 4 sont cylindriques.

Les anneaux de renfort 15 sont centrés sur l'axe géométrique 2 et présentent une section rectangulaire avec une hauteur h et une largeur 1 respectivement dans une direction radiale et une direction axiale. Une partie 15a des anneaux de renfort 15 est en saillie de la paroi intérieure 22 sur une distance e suivant une direction radiale à l'axe 2 et en allant vers cet axe 2. On entend par le terme "saillie" le fait que la paroi intérieure 22 s'étend de part et d'autre des anneaux 15 et par le fait que la circonférence intérieure desdits anneaux 15 est plus proche de l'axe 2 que la paroi 22 au voisinage des anneaux 15.
On notera d le diamètre de la paroi intérieure 22. Une quantité de matière suffisante, mais non critique, est laissée entre la périphérie 15b des anneaux de renfort 15 et la périphérie 4 de la jante 3. Les anneaux de renfort 15 sont soudés à la partie métallique 20 de la jante 6 à la fois par leur périphérie 15b et par leur deux flancs 15c sur une hauteur égale à h-e, afin de répartir sur la plus grande surface possible les sollicitations exercées par la partie métallique 20 de la jante 3 sur les anneaux de renfort 15, et par conséquent de réduire les contraintes ainsi exercés sur la matière de ladite partie métallique 20 au voisinage des surfaces 15b et 15c.

On se reportera maintenant à la figure 3. L'ensemble constitué de la jante 3 avec les anneaux 15 et entouré des aubes 5 est représenté en pointillés et est réalisé comme suit :
a) Réalisation d'une ébauche 25 avec une surépaisseur 25a par rapport à cet ensemble, ladite ébauche 25 comportant un alésage 26 ouvert latéralement d'un côté et radialement vers l'axe géométrique 2, et limité latéralement de l'autre côté par un épaulement intérieur 27.
b) Réalisation de deux anneaux fibreux 15 selon le procédé précité au titre de l'état de la technique, ces anneaux comportant vers l'intérieur une surépaisseur 28a sensiblement égale à la surépaisseur 25a.
c) Réalisation de deux entretoises 29 en matériau de la partie métallique du rotor.
d) Introduction dans l'alésage 26 contre l'épaulement 27 successivement d'un premier anneau fibreux 15, d'une entretoise 29, d'un second anneau fibreux 15, et d'une seconde entretoise 29 afin de remplir entièrement l'alésage 26 jusqu'au bord dudit alésage 26.
e) Mise en conteneur 30 sous vide de l'ensemble ébauche 25 + anneaux 15 + entretoise 29 ainsi obtenu. Le conteneur 30 est une enveloppe métallique étanche et déformable entourant cet ensemble et scellé sous vide.
f) Compression isostatique en autoclave du tout ainsi obtenu à la température de forgeage isotherme de l'alliage métallique de la jante 3. Cette opération permet de souder ensemble par diffusion de matière entre l'ébauche 25, les anneaux de renfort 15 et les entretoises 29.
g) Usinage de la jante 3 renforcée par les anneaux 15, ainsi que des aubes 5.

On se reportera de nouveau à la figure 2. Dans cet exemple, les anneaux 15 sont réalisés en fibres de carbure de silicium SiC noyées dans une matrice en alliage de titane TA6V. Le reste du rotor est en alliage de titane TA6V. Les anneaux de renfort 15 ont un rapport h/l=2 et sont en saillie de la paroi intérieure 26 d'une distance e telle que e/h=0,5. Les anneaux 15 ont une largeur l = 3,25 mm et une hauteur h = 6,5 mm. La partie métallique 20 de la jante 3 a une section rectangulaire dont la longueur prise entre les flancs 6 et 7 est égale à 16 mm, la hauteur prise entre les parois 22 et 4 égale à 4,5 mm, alors que le diamètre intérieur de la paroi 22 est d = 93 mm ;

A 400°C, le TA6V peut supporter une contrainte maximale σ₁ = 60.10⁷Pa, alors que les anneaux de renfort comportant des fibres de carbure de silicium SiC noyées dans une matrice de TA6V peuvent supporter une contrainte tangentielle maximale dans le sens des fibres σ₂ = 95.10⁷Pa et une contrainte radiale maximale en travers des fibres σ₃ = 20.107Pa seulement.

Avec le rotor conforme à l'invention, la contrainte maximale σ₂= 95.10⁷Pa est atteinte dans la partie 15a des anneaux 15 en saillie sur la paroi 22, alors que la contrainte maximale σ₁= 48.10⁷Pa est atteinte à la périphérie 15b des anneaux 15 et sur les flancs 15c de ces mêmes anneaux 15 dans l'épaisseur de la partie métallique 20 de la jante 6, ceci à une vitesse de rotation Θ = 28350tr/mm. Dans la partie métallique 20 de la jante 3, la contrainte σ₁ décroit très rapidement au fur et à mesure que l'on s'éloigne des parois 15b et 15c. Dans les anneaux de renfort 15, la contrainte radiale est maximale à la périphérie 15b et atteint une valeur σ₃ = 7,8.10⁷Pa qui reste encore inférieure à la limite tolérable, contrairement à ce que l'on pouvait craindre avec la disposition en saillie des anneaux de renfort. Les autres contraintes restent inférieures aux limites tolérables précitées.

On se reportera maintenant à la figure 4 illustrant un étage de rotor classique de mêmes dimensions que l'étage du rotor d'essai. La jante 3 et les aubes 5 sont les mêmes que dans l'exemple précédant à l'exception des anneaux de renfort qui sont remplacés par un anneau unique 35 de section rectangulaire s'étendant d'un flanc 6 à l'autre flanc 7 de la jante 3, ledit anneau 35 étant délimité intérieurement par la paroi 35a et ayant une hauteur h = 3 mm; On remarquera que l'épaisseur de matière entre la périphérie 4 de la jante 3 et la périphérie 35b de l'anneau de renfort 35 reste la même. Dans un tel anneau, une contrainte maximale σ₂ = 95.10⁷ Pa est atteinte vers la paroi intérieure 35a, et une contrainte maximale σ₁ = 52.10⁷ Pa est atteinte dans la partie métallique 20 de la jante 3 vers la périphérie 35b de l'anneau 35 pour une vitesse de rotation Θ = 27400tr/mm. La contrainte σ₁ décroit très vite lorsqu'on se rapproche de la périphérie 4 de la jante 3.

La comparaison des performances entre le rotor conforme à l'invention et un rotor de référence de mêmes dimensions montre que la présente invention apporte une solution aux deux problèmes posés :
a) Réduction de la quantité de matière fibreuse composant les anneaux 15 par rapport à l'anneau unique 35 : soit -11 % sur la section, et 15% sur le volume,
b) augmentation de la vitesse limite de rotation,
c) amélioration de la rigidité de la jante.

Cette comparaison montre un autre avantage de l'invention : A vitesse constante, l'invention permet de réduire les contraintes dans le rotor et en conséquence d'augmenter sa durée d'exploitation et/ou d'en réduire la masse.

La présente invention ne saurait être limitée à l'exemple qui vient d'en être donné, mais en couvre au contraire les variantes qui pourraient lui être apportées sans sortir de son cadre ni de son esprit :

L'exemple de réalisation présenté est celui d'un rotor d'essai aux formes simplifiées habituellement utilisé pour expérimenter dans des conditions standard une nouvelle technologie et effectuer des comparaisons avec les technologies connues. La disposition d'un ou plusieurs anneaux de renfort en saillie sur la paroi intérieure d'un rotor conformément à l'invention permet d'améliorer les performances de rotor aux formes variées, avec cependant des distributions des contraintes qui peuvent différer quelque peu selon la forme.

Le rotor peut ne comporter qu'un seul anneau de renfort 15 ou au contraire plus de deux anneaux. La formule à deux anneaux restant toutefois préférée car procurant le meilleur compromis entre la rigidité de la jante et la quantité de matière fibreuse utilisée.
Dans tous les cas le rotor sera réalisé en empilant dans l'alésage 26 contre l'épaulement 27 alternativement et en nombre égal un anneau fibreux préusiné 15 et une entretoise 29, en commençant par un anneau 15 et en terminant par une entretoise 29.

Dans une variante de réalisation, l'épaulement 17 est supprimé et remplacé par une entretoise 29 supplémentaire.

## Revendications

1. Etage de rotor de turbomachine renforcé par des fibres, ledit étage (1) comportant notamment une jante mince (3) à la périphérie (4) de laquelle sont disposées une pluralité d'aubes (5), ladite jante (3) comportant une partie (20) en alliage métallique et au moins un anneau de renfort fibreux (15) dont les fibres sont disposées suivant des circonférences centrées sur l'axe géométrique de rotation (2) de l'étage de rotor (1), **caractérisé en ce que** les anneaux de renfort (15) ont une hauteur h au moins égale à 1,5 fois leur largeur l, **en ce que** lesdits anneaux font saillie sur la paroi intérieure (22) de la jante (3) sur une distance e au moins égale au tiers de la hauteur h, et **en ce que** chaque anneau (15) est soudé à la partie métallique (20) de la jante (3) sur sa périphérie (15b) et ses deux flancs (15c).

2. Procédé de réalisation d'un étage de rotor conforme à la revendication 1, **caractérisé en ce qu'**il comporte notamment les opérations suivantes :
a) réalisation d'une ébauche (25) avec un alésage intérieur (26) ouvert latéralement d'un coté et radialement vers l'axe géométrique (2),
b) disposition dans l'alésage (26) alternativement d'anneaux fibreux préusinés (15) et d'entretoises (29),
c) mise en conteneur (30) sous vide et compression isostatique en autoclave à la température de forgeage isotherme de l'alliage métallique de la jante,
d) usinage de la jante (3) et des aubes (5).

## Patentansprüche

1. Faserverstärkte Rotorscheibe eines Turbotriebwerks, wobei diese Rotorscheibe (1) insbesondere eine dünne Felge (3) aufweist, an deren Umfangslinie (4) mehrere Schaufeln (5) angeordnet sind, wobei diese Felge (3) einen Teil (20) aus Metalllegierung und mindestens einen faserhaltigen Verstärkungsring (15) aufweist, dessen Fasern in Kreislinien angeordnet sind, die auf die geometrische Rotationsachse (2) der Rotorscheibe (1) zentriert sind,
**dadurch gekennzeichnet,**
**dass** die Höhe h der Verstärkungsringe (15) mindestens das 1,5-Fache ihrer Breite l beträgt, und dass diese Ringe über die Innenwand (22) der Felge (3) um eine Strecke e hinausragen, die mindestens gleich einem Drittel der Höhe h ist, und dass jeder Ring (15) mit seinem Umfang (15b) und seinen beiden Seiten (15b) an dem Metallteil (20) der Felge (3) angeschweißt ist.

2. Verfahren zur Herstellung einer Rotorscheibe nach Anspruch 1,
**dadurch gekennzeichnet,**
**dass** es insbesondere die folgenden Arbeitsschritte umfasst:
a) Herstellung eines Rohlings (25) mit einer Innenbohrung (26), die sich seitlich zu einer Seite hin und in radialer Richtung zur geometrischen Achse (2) hin öffnet,
b) abwechselndes Anordnen von vorgefertigten faserhaltigen Ringen (15) und von Abstandshaltern (29) in der Bohrung (26),
c) Einsetzen in Vakuumbehälter (30) und isostatisches Pressen im Autoklaven bei der Temperatur des Isothermschmiedens der Metalllegierung der Felge,
d) Bearbeitung der Felge (3) und der Schaufeln (5).

## Claims

1. A fibre reinforced turboengine rotor stage (1) comprising notably a thin rim (3) at the periphery (4) of which a number of blades (5) are disposed, said rim (3) comprising a metal alloy part (20) and at least one fibrous reinforcing ring (15) whose fibres are disposed along circumferences centred on the geometric axis (2) of rotation of the rotor stage (1), **characterised in that** the reinforcing rings (15) have a height h at least equal to 1.5 times their width l, **in that** said rings project from an inside wall (22) of the rim over a distance e at least equal to one-third of the height h, and **in that** each ring (15) is welded to the metal part (20) of the rim (3) at its periphery (15b) and on its two flanks (15c).

2. A process for making a rotor stage according to claim 1, **characterised in that** it comprises notably the following operations:
a) making a blank (25) formed with an internal bore (26) open laterally on one side and radially towards the geometric axis (2);
b) disposing in the bore (26) premachined fibrous rings (15) alternating with spacers (29);
(c) placing the blank in a vacuum container (30) and applying isostatic compression in an autoclave at the isothermal forging temperature of the metal alloy of the rim; and
d) machining the rim (3) and blades (5).
